(19) Europäisches Patentamt / European Patent Office / Office européen des brevets

(11) **EP 4 772 478 A2**

(12) **EUROPEAN PATENT APPLICATION**

(43) Date of publication:
08.07.2026 Bulletin 2026/28

(21) Application number: 25212519.0

(22) Date of filing: **30.10.2025**

(51) International Patent Classification (IPC):
*C01G 53/504* $^{(2025.01)}$    *H01M 4/525* $^{(2010.01)}$
*H01M 10/0525* $^{(2010.01)}$

(52) Cooperative Patent Classification (CPC):
**C01G 53/504; H01M 4/366; H01M 4/505;**
**H01M 4/525; H01M 10/052; H01M 10/0525;**
C01P 2006/40; H01M 2004/028; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.10.2024 KR 20240152898**

(71) Applicant: **SK On Co., Ltd.**
**Seoul 03161 (KR)**

(72) Inventors:
• **KIM, Hong Ki**
**34124 Daejeon (KR)**
• **NOH, Mi Jung**
**34124 Daejeon (KR)**
• **PARK, Hye Jin**
**34124 Daejeon (KR)**
• **LEE, Yoon Ji**
**34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY AND LITHIUM SECONDARY BATTERY INCLUDING THE SAME**

(57) An active material for a lithium secondary battery according to exemplary embodiments may have a peak ratio index (S) of 100 to 500, as defined by Equation 1 below:

[Equation 1]

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph). Therefore, the cathode active material may exhibit excellent structural stability and may provide a secondary battery with improved cycle life characteristics.

EP 4 772 478 A2

[FIG. 3]

**Description**

[CROSS-REFERENCE TO RELATED APPLICATION AND CLAIM OF PRIORITY]

This application claims priority to Korean Patent Application No. 10-2024-0152898, filed on October 31, 2024, in the Korean Intellectual Property Office (KIPO), the entire disclosure of which is incorporated by reference herein.

[BACKGROUND OF THE INVENTION]

1. Field of the Invention

The present disclosure relates to a cathode active material for a lithium secondary battery and a lithium secondary battery including the same. More specifically, the present disclosure relates to a cathode active material for a lithium secondary battery that exhibits excellent structural stability and a lithium secondary battery including the cathode active material.

2. Description of the Related Art

Secondary batteries are batteries that can be repeatedly charged and discharged. With the development of information, communication, and display industries, they have been widely applied as power sources for portable electronic communication devices such as camcorders, mobile phones, and laptop PCs. Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

The lithium secondary battery may include: an electrode assembly including a cathode, an anode, and a separation membrane (separator); and an electrolyte in which the electrode assembly is impregnated. In addition, the lithium secondary battery may further include, for example, a pouch-type outer case that accommodates the electrode assembly and the electrolyte.

The lithium secondary battery may improve energy density and output performance when operated under high-voltage conditions. However, when operated in the high-voltage environment, structural collapse of the cathode active material and side reactions with the electrolyte may deteriorate the stability and performance of the battery.

[SUMMARY OF THE INVENTION]

An object of the present disclosure is to provide a cathode active material for a lithium secondary battery that exhibits excellent structural stability under high-voltage operation.

A cathode active material for a lithium secondary battery according to exemplary embodiments may have a peak ratio index (S) of 100 to 500, as defined by Equation 1 below:

$$[\text{Equation 1}]$$

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

In some embodiments, B may be -2 or more and less than 0.

In some embodiments, A may be -1,000 or more and -200 or less.

In some embodiments, S may be 200 to 500.

In some embodiments, the dQ/dV discharge graph may be obtained by calculating the change in charge with respect to the change in voltage measured during charging and discharging of a half-cell manufactured using the cathode active material in a 25°C chamber, wherein the charging may be performed under CC/CV (constant current/constant voltage) conditions of 0.1C, 4.6 V, and 0.05C cut-off, and the discharging may be performed under CC (constant current) conditions of 0.1C and 3 V cut-off.

In some embodiments, the cathode active material may include a lithium metal oxide represented by Formula 1 below:

[Formula 1]     $Li_xNi_aM_bO_{2+z}$

(in Formula 1, M may be at least one of Co, Mn, and Al, and $0.9 \leq x \leq 1.2$, $0.6 \leq a \leq 0.8$, $0.2 \leq b \leq 0.4$, and $-0.5 \leq z \leq 0.1$).

In some embodiments, the cathode active material may include a lithium metal oxide represented by Formula 1-1 below:

[Formula 1-1]     $Li_xNi_aM1_{b1}M2_{b2}O_{2+z}$

(in Formula 1-1, M1 may be at least one of Co, Mn, and Al, and M2 may be at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P, and Zr, and $0.9 \leq x \leq 1.2$, $0.6 \leq a \leq 0.8$, $0.2 \leq b1+b2 \leq 0.4$, and $-0.5 \leq z \leq 0.1$).

In some embodiments, M may be Co and Mn, and $0.6 \leq a \leq 0.7$.

In some embodiments, the cathode active material may include a lithium metal compound core represented by Formula 1 and a coating layer covering at least a portion of the core, and the coating layer may include the M element of Formula 1.

In some embodiments, the cathode active material may include a lithium metal compound core represented by Formula 1-1 and a coating layer covering at least a portion of the core, wherein the coating layer may include the M1 element of Formula 1-1.

In some embodiments, the content of the coating element of the coating layer may be 0.5 mol% to 3 mol% based on elements excluding lithium and oxygen in the cathode active material.

In some embodiments, the cathode active material may have a crystal size of the (003) plane of 300 nm to 850 nm as measured by X-ray diffraction analysis (XRD).

A method for preparing a cathode active material for a lithium secondary battery according to exemplary embodiments may include mixing a transition metal precursor and a lithium precursor and calcining the mixture, wherein the cathode active material for a lithium secondary battery may be a cathode active material having a peak ratio index (S) of 100 to 500, as defined by Equation 1 below:

$$[\text{Equation 1}]$$

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

In some embodiments, the calcination temperature may be 900°C to 1,000°C.

In some embodiments, the heating rate in the calcination step may be 2°C/min to 4°C/min.

In some embodiments, the holding time during the calcination may be 8 hours to 14 hours.

A lithium secondary battery according to exemplary embodiments may include: a cathode; and an anode disposed opposite to the cathode, wherein the cathode may include the cathode active material according to the present disclosure.

The cathode active material for a lithium secondary battery according to exemplary embodiments may exhibit excellent structural stability under high-voltage operation, thereby showing improved cycle life characteristics.

The secondary battery including the cathode active material of the present disclosure may be widely applied in green technology fields, such as electric vehicles, battery charging stations, as well as solar power generation, wind power generation, and the like, which use the batteries. In addition, the lithium secondary battery of the present disclosure may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and advantages of the present disclosure will be more clearly understood from the following detailed description taken in conjunction with the accompanying drawings, in which:

FIG. 1 is a schematic plan view illustrating a lithium secondary battery according to exemplary embodiments;
FIG. 2 is a schematic cross-sectional view illustrating the electrode assembly according to exemplary embodiments;
FIG. 3 is a differential capacity (dQ/dV) graph according to Example 1 of the present disclosure; and
FIG. 4 is a dQ/dV graph according to Comparative Example 1.

[DETAILED DESCRIPTION OF THE INVENTION]

According to embodiments of the present disclosure, a cathode active material having a specific peak ratio in a differential capacity (dQ/dV) graph is provided. In addition, according to embodiments of the present disclosure, a lithium secondary battery including the cathode active material is provided.

Hereinafter, specific embodiments of the present disclosure will be described with reference to the accompanying drawings. However, these are merely illustrative, and the spirit of the present disclosure is not limited thereto. Furthermore, the accompanying drawings illustrate exemplary structures, and the configurations and structures of the present disclosure are not limited to those illustrated in the drawings.

**<Cathode active material>**

The cathode active material according to exemplary embodiments may have a peak ratio index (S) of 100 to 500, as defined by Equation 1 below:

$$[\text{Equation 1}]$$

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

The dQ/dV graph of the secondary battery may serve as an indicator of chemical and/or physical changes inside the battery. The cathode active material according to embodiments of the present disclosure may improve the structural stability of the cathode active material under high-voltage operation by having a ratio of the maximum peak intensity in the 4.2 V to 4.3 V region to the peak intensity at 4.5 V in the dQ/dV discharge graph within the above range. When the structural stability of the cathode active material is improved, the cycle life characteristics of the battery may be enhanced. In this aspect, for example, S may be 200 to 500, 250 to 500, or 300 to 500. The cycle life characteristics of the battery may be improved within the above range.

For example, the peak at 4.5 V in the dQ/dV discharge graph may serve as an indicator of the structural change of the cathode active material under high-voltage operation. The smaller the peak at 4.5 V in the dQ/dV discharge graph, the smaller the structural change of the cathode active material under high-voltage operation, and accordingly, the higher the structural stability of the cathode active material. For example, in Equation 1, B may be -2 or more and less than 0, -1.7 or more and less than 0, -1.5 or more and less than 0, -1.3 or more and less than 0, -1.0 or more and less than 0, -0.8 or more and less than 0, or -0.5 or more and less than 0. When B falls within this range, the structural stability of the cathode active material may be further enhanced.

Similarly, for example, in Equation 1, A may be -1,000 to -200, -800 to -200, -700 to -200, or -500 to -200. When A falls within this range, the structural stability of the cathode active material may be further enhanced.

In some embodiments, the dQ/dV graph may be derived by calculating the change in charge with respect to the change in voltage measured during charging and discharging of a half-cell manufactured using the cathode active material in a 25°C chamber, wherein the charging is performed under CC/CV (constant current/constant voltage) conditions of 0.1C, 4.6 V, and 0.05C cut-off, and the discharging is performed under CC (constant current) conditions of 0.1C and 3 V cut-off.

In some embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1]        $Li_xNi_aM_bO_{2+z}$

In Formula 1, M may include at least one of Co, Mn and Al, and x, a, b and z may satisfy $0.9 \leq x \leq 1.2$, $0.6 \leq a \leq 0.8$, $0.2 \leq b \leq 0.4$, and $-0.5 \leq z \leq 0.1$. For example, x, a, b and z may satisfy $0.9 \leq x \leq 1.2$, $0.6 \leq a \leq 0.7$, $0.3 \leq b \leq 0.4$, and $-0.5 \leq z \leq 0.1$.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the lithium-nickel metal oxide may include a layered structure or a crystal structure represented by Formula 1-1 below.

$$[\text{Formula 1-1}] \qquad Li_xNi_{ia}M1_{b1}M2_{b2}O_{2+z}$$

In Formula 1-1, M1 may include at least one of Co, Mn and Al, and M2 may include at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and x, a, b1, b2 and z may satisfy $0.9 \leq x \leq 1.2$, $0.6 \leq a \leq 0.8$, $0.2 \leq b1+b2 \leq 0.4$, and $-0.5 \leq z \leq 0.1$.

In some embodiments, the cathode active material may include a coating layer. For example, the cathode active material may include a lithium metal compound core represented by Formula 1 or Formula 1-1 and a coating layer covering at least a portion of the core.

In some embodiments, the coating layer may include elements that are substantially identical to or similar to the above-described main active elements (e.g., M in Formula 1, and M2 in Formula 1-1) as coating elements. For example, the coating element may be at least one of Co, Mn, Al, B and W. For example, the coating element may be at least one of Co, Al, B, and W. As the cathode active material includes the coating layer, the structural stability of the cathode active material may be further enhanced.

In some embodiments, the content of the coating element included in the coating layer may be 0.5 mol% to 3 mol% or 1 mol% to 3 mol%, based on the total molar amount of elements excluding lithium and oxygen in the cathode active material. Within this content range, the structural stability of the cathode active material may be further enhanced.

In some embodiments, the cathode active material may further include a doping element. For example, elements that are substantially identical to or similar to the above-described auxiliary elements may be used as doping elements. For example, the above-described elements may be used alone or in combination of two or more thereof.

The coating element or the doping element may be present on the surface of lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide having a slightly increased nickel content may be used.

Ni may serve as a transition metal associated with the output and capacity of the lithium secondary battery. Therefore, by increasing the Ni content, a high-capacity cathode and high-capacity lithium secondary battery may be provided. However, as the Ni content increases, long-term storage stability and cycle life stability of the cathode or secondary battery may be relatively reduced, and side reactions with the electrolyte may also increase. Therefore, by including Co to maintain electrical conductivity without excessively increasing the Ni content, the cycle life stability and capacity retention characteristics of the lithium secondary battery may be improved through Mn.

In some embodiments, the Ni content (e.g., the molar fraction of nickel based on the total molar amount of nickel, cobalt and manganese) in the NCM-based lithium oxide may be 0.6 to 0.8, or 0.6 to 0.7.

In some embodiments, the Co content (e.g., the molar fraction of cobalt based on the total molar amount of nickel, cobalt and manganese) in the NCM-based lithium oxide may be 0.07 to 0.1.

In some embodiments, the Mn content (e.g., the molar fraction of manganese based on the total molar amount of nickel, cobalt and manganese) in the NCM-based lithium oxide may be 0.25 to 0.35.

When nickel, cobalt and manganese in the NCM-based lithium oxide are within the above content ranges, the cathode active material may exhibit excellent structural stability, which may be advantageous for high-voltage operation.

In some embodiments, the cathode active material may have a crystal size of the (003) plane, as measured by X-ray diffraction (XRD), of 300 nm to 850 nm, 400 nm to 850 nm, 500 nm to 850 nm, or 500 nm to 800 nm. When the crystal size falls within the above range, the structural stability of the cathode active material may be further enhanced under high-voltage operation.

According to exemplary embodiments, the cathode active material may be a cathode active material prepared by the preparation method described below. Hereinafter, one embodiment of a method for preparing the above-described cathode active material for a lithium secondary battery will be described in detail.

For example, lithium transition metal oxide particles may be prepared through a reaction between a transition metal precursor and a lithium precursor. The transition metal precursor (e.g., a Ni-Co-Mn precursor) may be prepared through a co-precipitation reaction.

For example, the transition metal precursor may be prepared through the co-precipitation reaction of metal salts. The metal salts may include nickel salts, manganese salts and/or cobalt salts.

The nickel salts may include nickel sulfate, nickel hydroxide, nickel nitrate, nickel acetate, a hydrate thereof, and the like. These may be used alone or in combination of two or more thereof. For example, the nickel salt may be nickel sulfate.

Examples of the manganese salts may include manganese sulfate, manganese acetate, a hydrate thereof, and the like. These may be used alone or in combination of two or more thereof. For example, the manganese salt may be manganese sulfate.

Examples of the cobalt salts may include cobalt sulfate, cobalt nitrate, cobalt carbonate, a hydrate thereof, and the like. These may be used alone or in combination of two or more thereof. For example, the cobalt salt may be cobalt sulfate.

The metal salts may be mixed with a precipitant and/or chelating agent in a ratio that satisfies the content or concentration ratio of each metal described with reference to Formula, to prepare an aqueous solution. The aqueous solution may be co-precipitated in a reactor to prepare a transition metal precursor.

The precipitant may include an alkaline compound such as sodium hydroxide ($NaOH$), sodium carbonate ($Na_2CO_3$), or the like. For example, the precipitant may be sodium hydroxide.

The chelating agent may include ammonium hydroxide (e.g., $NH_3H_2O$), ammonium carbonate (e.g., $NH_3HCO_3$), or the like. For example, the chelating agent may be ammonium hydroxide (e.g., $NH_3H_2O$)

For example, the co-precipitation reaction may be performed at a temperature of about 40°C to 60°C for about 24 to 72 hours.

The lithium precursor compound may include, for example, lithium carbonate, lithium nitrate, lithium acetate, lithium oxide, or lithium hydroxide. These may be used alone or in combination of two or more thereof.

The lithium precursor compound and the transition metal precursor may be mixed and calcined to prepare lithium transition metal oxide particles. The calcination temperature may be, for example, 900°C to 1,000°C, 900°C to 980°C, 930°C to 980°C, or 930°C to 950°C. When the calcination temperature satisfies the above-described range, the structural stability of the cathode active material under high-voltage operation may be further enhanced.

In one embodiment, the calcination may be performed under an oxygen atmosphere.

In some embodiments, the heating rate to the calcination temperature may be 2°C/min to 4°C/min. When the heating rate falls within this range, the structural stability of the resulting cathode active material may be improved, making it more advantageous for high-voltage operation.

The lithium transition metal oxide particles may be prepared by heating the mixture of the lithium precursor compound and the transition metal precursor to the calcination temperature and then maintaining the calcination temperature for a predetermined period of time.

In some embodiments, the holding time at the calcination temperature may be 8 to 14 hours. When the holding time falls within this range, the structural stability of the resulting cathode active material may be improved, making it more advantageous for high-voltage operation.

In some embodiments, a coating layer may be formed on the surface of the lithium transition metal oxide particles obtained after calcination. For example, a coating material including the above-described coating element may be mixed with lithium transition metal oxide particles and then calcined to prepare lithium transition metal oxide particles having a coating layer formed thereon.

The coating element of the coating layer may be as described above, and the coating material may be a salt of the coating element. For example, the coating material may be a sulfate, hydroxide, or oxide of the coating element.

**<Lithium secondary battery>**

A lithium secondary battery according to exemplary embodiments may include a cathode and an anode positioned opposite the cathode. An electrode for a lithium secondary battery including the coating according to exemplary embodiments may be at least one of the cathode and the anode.

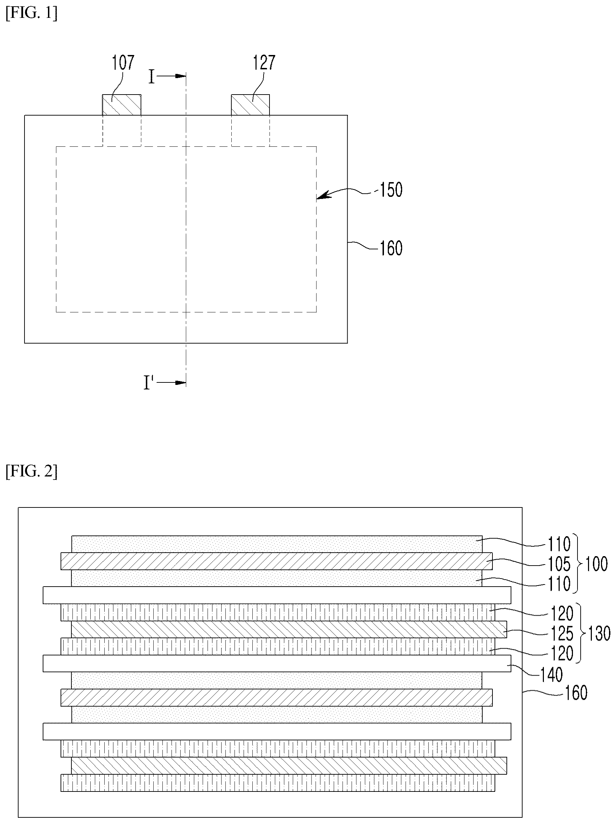

FIGS. 1 and 2 are schematic plan and cross-sectional views, respectively, illustrating the secondary battery according to exemplary embodiments. For example, FIG. 2 is a cross-sectional view taken along the line I-I' shown in FIG. 1 in the thickness direction of the lithium secondary battery.

Referring to FIGS. 1 and 2, the secondary battery may include an electrode assembly 150 and a case 160 that accommodates the electrode assembly 150. The electrode assembly 150 may include a cathode 100, an anode 130, and a separator 140.

The cathode 100 may include a cathode current collector 105 and a cathode active material layer 110 formed on at least one surface of the cathode current collector 105. In some embodiments, the above-described coating may be formed on at least a portion of the surface of the cathode active material layer 110.

According to exemplary embodiments, the cathode active material layer 110 may be formed on both surfaces (e.g., the upper and lower surfaces) of the cathode current collector 105. For example, the cathode active material layer 110 may be coated on the upper and lower surfaces of the cathode current collector 105, respectively, and may be directly coated on the surface of the cathode current collector 105.

The cathode current collector 105 may include, for example, stainless steel, nickel, aluminum, titanium, copper, or an alloy thereof, and preferably includes aluminum or an aluminum alloy.

In some embodiments, the cathode active material layer 110 may be formed by coating a cathode slurry on the cathode current collector 105, followed by compression and drying, to form the cathode active material layer 110. For example, the cathode slurry may be prepared by mixing and stirring the cathode active material with a binder, a conductive material and/or a dispersant in a solvent. In some embodiments, the above-described coating may be formed on at least a portion of the surface of the cathode active material.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as the cathode binder. In this case, the amount of the binder for forming the cathode active material layer 110 may be reduced and the amount of the cathode active material may be relatively increased, thereby improving the output and capacity of the secondary battery.

The conductive material may be included to promote electron migration between the active material particles. For example, the conductive material may include carbon-based conductive materials such as graphite, carbon black, graphene, or carbon nanotubes; and/or metal-based conductive materials such as tin, tin oxide, and titanium oxide; and perovskite materials such as $LaSrCoO_3$, and $LaSrMnO_3$.

In some embodiments, the cathode 100 may have an electrode density of 3.0 to 3.9 g/cc, and preferably 3.2 to 3.8 g/cc.

The anode 130 may include an anode current collector 125 and an anode active material layer 120 formed on at least one surface of the anode current collector 125. In some embodiments, a coating may be formed on at least a portion of the surface of the anode active material layer 120.

According to exemplary embodiments, the anode active material layer 120 may be formed on both surfaces (e.g., the upper and lower surfaces) of the anode current collector 125. The anode active material layer 120 may be coated on the upper and lower surfaces of the anode current collector 125, respectively, and may be in direct contact with the surface of the anode current collector 125.

The anode current collector 125 may include gold, stainless steel, nickel, aluminum, titanium, copper, or an alloy thereof, and preferably includes copper or a copper alloy.

According to exemplary embodiments, the anode active material layer 120 may be formed by applying (coating) an anode slurry onto the anode current collector 125, followed by compression (roll-pressing), and drying, to form the anode active material layer 120. For example, the anode slurry may be prepared by mixing and stirring the anode active material with a binder, a conductive material and/or a dispersant in a solvent. In some embodiments, the above-described coating may be formed on at least a portion of the surface of the anode active material.

In some embodiments, the anode active material may include carbon-based materials such as crystalline carbon, amorphous carbon, carbon composites, or carbon fibers; a lithium alloy; silicon, tin, or the like.

Examples of the amorphous carbon may include hard carbon, coke, mesocarbon microbeads (MCMB), mesophase pitch-based carbon fibers (MPCF), or the like.

Examples of the crystalline carbon may include graphite-based carbon such as natural graphite, graphitized coke, graphitized MCMB, graphitized MPCF or the like. Elements included in the lithium alloy may include Al, Zn, Bi, Cd, At, Si, Pb, Sn, Ga, or In.

As the binder and the conductive material, materials which are substantially the same as or similar to the above-described materials used in the cathode 100 may be used. In some embodiments, the binder for forming the anode 130 may include, for example, styrene-butadiene rubber (SBR) or an acrylic binder to ensure compatibility with the graphite-based active material, and may be used together with a thickener such as carboxymethyl cellulose (CMC).

In exemplary embodiments, the anode active material layer 120 may have a pressed density of 1.4 to 1.9 g/cc.

In some embodiments, the anode 130 may have an area (e.g., a contact area with the separator 140) and/or volume greater than that of the cathode 100. Thereby, lithium ions generated from the cathode 100 may migrate smoothly to the anode 130 without being precipitated during the process, thereby further improving the output and capacity characteristics.

The separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator may include a nonwoven fabric made of glass fibers having a high melting point, polyethylene terephthalate fibers, etc.

The separator 140 may extend between the cathode 100 and the anode 130, and may be folded and wound along the thickness direction of the lithium secondary battery. Accordingly, a plurality of cathodes 100 and anodes 130 may be stacked in the thickness direction through the separator 140.

According to some embodiments, an electrode cell is defined by the cathode 100, the anode 130 and the separator 140, and a plurality of electrode cells may be stacked to form, for example, a jelly roll type electrode assembly 150. For example, the electrode assembly 150 may be formed by winding, stacking, or folding the separator 140.

The electrode assembly 150 is accommodated in the case 160, and an electrolyte may be injected into the case 160 together therewith. The case 160 may include, for example, a pouch, a can, or the like.

According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide (DMSO), acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

As illustrated in FIG. 1, electrode tabs (cathode tabs and anode tabs) may protrude from the cathode current collector 105 and the anode current collector 125, respectively, which belong to each electrode cell, and may extend to one side of the case 160. The electrode tabs may be welded together with the one side of the case 160 and connected to electrode leads (a cathode lead 107 and an anode lead 127) that extend or are exposed to the outside of the case 160.

In FIG. 1, the cathode lead 107 and the anode lead 127 are shown as being formed on the same side of the lithium secondary battery or the case 160, but they may alternatively be formed on the opposite sides.

For example, the cathode lead 107 may be formed on one side of the case 160, and the anode lead 127 may be formed on the other side of the case 160.

The lithium secondary battery may be manufactured, for example, in a cylindrical shape using a can, a prismatic shape, a pouch shape or a coin shape.

Hereinafter, experimental examples including specific examples and comparative examples are presented to aid in the understanding of the present invention. However, these examples are provided merely for illustrative purposes of the present invention and are not intended to limit the scope of the appended claims. It will be apparent to those skilled in the art that various changes and modifications can be made within the scope and spirit of the present invention, and such changes and modifications are to be regarded as falling within the scope of the appended claims.

## Example

### <Cathode active material>

$NiSO_4$, $CoSO_4$ and $MnSO_4$ were mixed in a molar ratio of 0.6:0.1:0.3 using distilled water from which dissolved oxygen had been removed by bubbling $N_2$ for 24 hours. The solution was introduced into a reactor at 50 °C, and NaOH as a precipitant and $NH_3H_2O$ as a chelating agent were added thereto, followed by performing a co-precipitation reaction for 48 hours to obtain $Ni_{0.6}Co_{0.1}Mn_{0.33}(OH)_2$ as a transition metal precursor. The obtained precursor was dried at 80 °C for 12 hours, and then further dried at 110°C for 12 hours.

Lithium hydroxide and the transition metal precursor were added to a dry high-speed mixer in a ratio of 1.01:1 and uniformly mixed for 5 minutes.

The mixture was put into a calcination furnace, heated to 940 °C at a rate of 2 °C/min, and maintained at 940 °C for 10 hours. Oxygen was continuously supplied at a flow rate of 20 L/min during the heating and holding steps. After completion of the calcination, the resulting lithium-transition metal oxide particles and $CoSO_4$ (1.0 mol%) were added to a dry high-speed mixer and uniformly mixed for 30 minutes.

The resulting mixture was put again into a calcination furnace, heated to 830 °C at a rate of 5 °C/min, and maintained at 830 °C for 5 hours under mixing. After completion of the calcination, the mixture was naturally cooled to room temperature, followed by pulverization and classification to obtain lithium-transition metal oxide particles coated with cobalt (Co) having a composition of $LiNi_{0.6}Co_{0.1}Mn_{0.3}O_2$.

**<Cathode>**

A cathode slurry was prepared by mixing the lithium-transition metal oxide as a cathode active material, carbon black as a conductive material, and polyvinylidene fluoride (PVdF) as a binder in a weight ratio of 92:5:3.

The cathode slurry was uniformly applied onto an aluminum foil (thickness: 15 $\mu$m) having a protrusion part (a cathode tab) on one side, excluding the protrusion part, and then dried and roll-pressed to fabricate a cathode.

**<Battery: Standard cell>**

An anode slurry was prepared by mixing a mixture of artificial graphite and natural graphite (7:3 weight ratio) as an anode active material, styrene-butadiene rubber as a binder, and carboxymethyl cellulose as a thickener in a weight ratio of 97:1:2.

The anode slurry was uniformly applied onto a copper foil (thickness: 15 $\mu$m) having a protrusion part (an anode tab) on one side, excluding the protrusion part, and then dried and roll-pressed to fabricate an anode.

A polyethylene separator (thickness: 20 $\mu$m) was interposed between the cathode and the anode to form an electrode assembly. Subsequently, a cathode lead and an anode lead were welded and connected to the cathode tab and the anode tab, respectively.

The electrode assembly was placed in a pouch (case) so that some regions of the cathode lead and anode lead were exposed to the outside, and three sides of the pouch were sealed, leaving one side as an electrolyte injection region.

After injecting an electrolyte, the remaining side as the electrolyte injection region was also sealed, followed by impregnation for 12 hours to manufacture a secondary battery.

A solution, prepared by dissolving a 1M LiPF$_6$ solution (using a mixed solvent of EC/EMC/DEC in a volume ratio of 25:30:45), and further adding and mixing 1 wt% of fluoroethylene carbonate (FEC), 0.3 wt% of vinylethylene carbonate (VC), 1.0 wt% of LiPO$_2$F$_2$ (lithium difluorophosphate), 0.5 wt% of 1,3-propane sultone (PS), and 0.5 wt% of prop-1-ene-1,3-sultone (PRS) based on the total weight of the electrolyte, was used as the electrolyte.

**<Battery: Half-cell>**

A half-cell was manufactured in the same manner as in the standard cell, except that lithium metal was used as the anode.

## Comparative Example 1

A battery was manufactured in the same manner as in Example 1, except that CoSO$_4$ was not mixed with the lithium-transition metal composite oxide particles.

## Examples 2 to 9 and Comparative Examples 2 to 6

Half-cells and standard cells were manufactured in the same manner as in Example 1, except that the type of cathode active material, coating material, coating element content, first calcination temperature, heating rate, and calcination holding time were varied, as shown in Table 1 below. However, in Examples 5 to 7, in which different coating elements were used, the calcination temperature after mixing the coating elements was set to 630°C.

The dQ/dV graphs of the manufactured half-cells were calculated, and the corresponding A/B values are also shown in Table 1 below.

[TABLE 1]

| | Cathode active material | Coating material / coating element | Coating element content (mol%) | First calcination temperature (°C) | First calcination heating rate (°C/min) | First calcination holding time | Crystal size (nm) | A/B |
|---|---|---|---|---|---|---|---|---|
| Example 1 | $LiNi_{0.6}Co_{0.1}Mn_{0.3}O_2$ | $CoSO_4$/Co | 1.0 | 940 | 2 | 10 | 702 | 328.61 |
| Example 2 | $LiNi_{0.6}Co_{0.1}Mn_{0.3}O_2$ | $CoSO_4$/Co | 1.5 | 940 | 2 | 10 | 704 | 336.96 |
| Example 3 | $LiNi_{0.6}Co_{0.1}Mn_{0.3}O_2$ | $CoSO_4$/Co | 2.0 | 940 | 2 | 10 | 709 | 421.37 |
| Example 4 | $LiNi_{0.6}Co_{0.1}Mn_{0.3}O_2$ | $CoSO_4$/Co | 3.0 | 940 | 2 | 10 | 711 | 277.95 |
| Example 5 | $LiNi_{0.6}Co_{0.1}Mn_{0.3}O_2$ | $Al_2O_3$/Al | 1.0 | 940 | 2 | 10 | 321 | 376.84 |
| Example 6 | $LiNi_{0.6}Co_{0.1}Mn_{0.3}O_2$ | $WO_3$/W | 1.0 | 940 | 2 | 10 | 580 | 311.28 |
| Example 7 | $LiNi_{0.6}Co_{0.1}Mn_{0.3}O_2$ | $B_2O_3$/B | 1.0 | 940 | 2 | 10 | 567 | 389.93 |
| Example 8 | $LiNi_{0.65}CO_{0.07}Mn_{0.28}O_2$ | $CoSO_4$/Co | 1.0 | 940 | 2 | 10 | 588 | 465.58 |
| Example 9 | $LiNi_{0.7}Co_{0.1}Mn_{0.2}O_2$ | $CoSO_4$/Co | 1.0 | 940 | 2 | 10 | 530 | 490.53 |
| Comparative Example 1 | $LiNi_{0.6}Co_{0.1}Mn_{0.3}O_2$ | - | - | 940 | 2 | 10 | 526 | 35.97 |
| Comparative Example 2 | $LiNi_{0.6}Co_{0.1}Mn_{0.3}O_2$ | $CoSO_4$/Co | 1.0 | 940 | 7 | 10 | 295 | 38.34 |
| Comparative Example 3 | $LiNi_{0.6}Co_{0.1}Mn_{0.3}O_2$ | $CoSO_4$/Co | 1.0 | 750 | 2 | 10 | 204 | 15.78 |
| Comparative Example 4 | $LiNi_{0.6}Co_{0.1}Mn_{0.3}O_2$ | $CoSO_4$/Co | 1.0 | 940 | 2 | 7 | 196 | 22.03 |
| Comparative Example 5 | $LiNi_{0.8}Co_{0.1}Mn_{0.1}O_2$ | $CoSO_4$/Co | 1.0 | 940 | 2 | 10 | 190 | 9.56 |
| Comparative Example 6 | $LiNi_{0.5}Co_{0.2}Mn_{0.3}O_2$ | $CoSO_4$/Co | 1.0 | 940 | 2 | 10 | 168 | 8.17 |

**Experimental Example 1: dQ/dV graph**

Charging (CC/CV 0.1C, 4.6 V, 0.05C cut-off) and discharging (CC 0.1C, 3 V cut-off) were performed on the half-cells manufactured according to the examples and comparative examples in a 25°C chamber. The change in charge was calculated based on the change in voltage measured during charging and discharging, thereby deriving differential capacity (dQ/dV). The peak intensity (B) at 4.5 V and the maximum peak intensity (A) in the 4.2 V to 4.3 V region after 10 cycles for the half-cells of the examples and comparative examples are shown in Table 2 below.

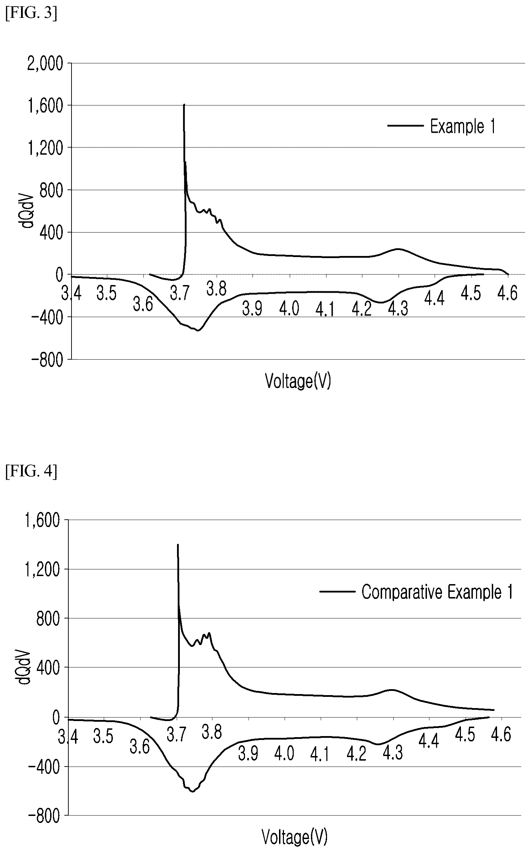

Additionally, FIGS. 3 and 4 illustrate the dQ/dV graphs of Example 1 and Comparative Example 1, respectively.

[TABLE 2]

| Classification | A | B | A/B |
|---|---|---|---|
| Example 1 | -253.03 | -0.77 | 328.61 |
| Example 2 | -266.20 | -0.79 | 336.96 |
| Example 3 | -248.61 | -0.59 | 421.37 |
| Example 4 | -233.48 | -0.84 | 277.95 |
| Example 5 | -229.87 | -0.61 | 376.84 |
| Example 6 | -252.14 | -0.81 | 311.28 |
| Example 7 | -265.15 | -0.68 | 389.93 |
| Example 8 | -297.97 | -0.64 | 465.58 |
| Example 9 | -284.51 | -0.58 | 490.53 |
| Comparative Example 1 | -227.66 | -6.33 | 35.97 |
| Comparative Example 2 | -248.45 | -6.48 | 38.34 |
| Comparative Example 3 | -237.68 | -15.06 | 15.78 |
| Comparative Example 4 | -244.57 | -11.10 | 22.03 |
| Comparative Example 5 | -251.78 | -26.35 | 9.56 |
| Comparative Example 6 | -267.16 | -32.69 | 8.17 |

**Experimental Example 2: Evaluation of cycle life characteristics**

500 cycles of charging (CC/CV 1C, 4.4 V, 0.1C cut-off) and discharging (CC 1C, 2.5 V cut-off) were repeatedly performed on the standard cells manufactured according to the examples and comparative examples. Thereafter, the capacity retention was evaluated as the percentage obtained by dividing the discharge capacity at the 500th cycle by the discharge capacity at the first cycle. The measurement and evaluation results are shown in Table 3 below.

[TABLE 3]

| Classification | Capacity retention (%) | A/B |
|---|---|---|
| Example 1 | 93 | 328.61 |
| Example 2 | 93 | 336.96 |
| Example 3 | 94 | 421.37 |
| Example 4 | 92 | 277.95 |
| Example 5 | 93 | 376.84 |
| Example 6 | 93 | 311.28 |
| Example 7 | 93 | 389.93 |
| Example 8 | 95 | 465.58 |
| Example 9 | 96 | 490.53 |
| Comparative Example 1 | 88 | 35.97 |

(continued)

| Classification | Capacity retention (%) | A/B |
|---|---|---|
| Comparative Example 2 | 84 | 38.34 |
| Comparative Example 3 | 83 | 15.78 |
| Comparative Example 4 | 85 | 22.03 |
| Comparative Example 5 | 78 | 9.56 |
| Comparative Example 6 | 88 | 8.17 |

Referring to Table 3, it can be seen that the examples exhibited excellent capacity retention even after 500 cycles, compared to the comparative examples.

The present disclosure relates also to the following numbered aspects:

Aspect 1.A cathode active material for a lithium secondary battery having a peak ratio index (S) of 100 to 500, as defined by Equation 1 below:

$$[Equation\ 1]$$

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

Aspect 2. The cathode active material for a lithium secondary battery according to aspect 1, wherein B is -2 or more and less than 0 and/or wherein A is -1,000 or more and -200 or less and/or wherein S is 200 to 500.

Aspect 3.The cathode active material for a lithium secondary battery according to aspects 1 or 2, wherein the dQ/dV discharge graph is obtained by calculating the change in charge with respect to the change in voltage measured during charging and discharging of a half-cell manufactured using the cathode active material in a 25°C chamber, wherein the charging is performed under CC/CV (constant current/constant voltage) conditions of 0.1C, 4.6 V, and 0.05C cut-off, and the discharging is performed under CC (constant current) conditions of 0.1C and 3 V cut-off.

Aspect 4. The cathode active material for a lithium secondary battery according to one of aspects 1 to 3, comprising a lithium metal oxide represented by Formula 1 below:

[Formula 1]        $Li_xNi_aM_bO_{2+z}$

(in Formula 1, M is at least one of Co, Mn, and Al, preferably Co and Mn, and $0.9 \leq x \leq 1.2$, $0.6 \leq a \leq 0.8$, preferably $0.6 \leq a \leq 0.7$, $0.2 \leq b \leq 0.4$, preferably $0.3 \leq b \leq 0.4$, and $-0.5 \leq z \leq 0.1$).

Aspect 5.The cathode active material for a lithium secondary battery according to one of aspects 1 to 4, comprising a lithium metal oxide represented by Formula 1-1 below:

[Formula 1-1]        $Li_xNi_aM1_{b1}M2_{b2}O_{2+z}$

(in Formula 1-1, M1 is at least one of Co, Mn, and Al, and M2 is at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P, and Zr, and $0.9 \leq x \leq 1.2$, $0.6 \leq a \leq 0.8$, $0.2 \leq b1+b2 \leq 0.4$, and $-0.5 \leq z \leq 0.1$).

Aspect 6.The cathode active material for a lithium secondary battery according to aspect 4, comprising a lithium metal compound core represented by Formula 1 and a coating layer covering at least a portion of the core, and wherein the coating layer includes the M element of Formula 1.

Aspect 7.The cathode active material for a lithium secondary battery according to aspect 6, wherein the content of the coating element of the coating layer is 0.5 mol% to 3 mol% based on elements excluding lithium and oxygen in the cathode active material.

Aspect 8.The cathode active material for a lithium secondary battery according to aspect 5, comprising a lithium metal compound core represented by Formula 1-1 and a coating layer covering at least a portion of the core, wherein the coating layer includes the M1 element of Formula 1.

Aspect 9.The cathode active material for a lithium secondary battery according to aspect 8, wherein the content of the coating element of the coating layer is 0.5 mol% to 3 mol% based on elements excluding lithium and oxygen in the cathode active material.

Aspect 10. The cathode active material for a lithium secondary battery according to one of aspects 1 to 9, wherein the cathode active material has a crystal size of the (003) plane of 300 nm to 850 nm as measured by X-ray diffraction analysis (XRD).

Aspect 11. A method for preparing a cathode active material for a lithium secondary battery, comprising mixing a transition metal precursor and a lithium precursor and calcining the mixture,

wherein the cathode active material for a lithium secondary battery is a cathode active material having a peak ratio index (S) of 100 to 500, as defined by Equation 1 below:

$$[\text{Equation 1}]$$

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

Aspect 12. The method for preparing a cathode active material for a lithium secondary battery according to aspect 11, wherein the calcination temperature is 900°C to 1,000°C and/or wherein the heating rate in the calcination step is 2°C/min to 4°C/min and/or wherein the holding time during the calcination is 8 hours to 14 hours.

Aspect 13. A cathode active material for a lithium secondary battery manufactured by method according to aspects 11 or 12.

Aspect 14. A lithium secondary battery comprising:

a cathode; and
an anode disposed opposite to the cathode,
wherein the cathode comprises the cathode active material according to one of aspects 1 to 10 and/or manufactured by method according to aspects 11 or 12.

**Claims**

1. A cathode active material for a lithium secondary battery having a peak ratio index (S) of 100 to 500, as defined by Equation 1 below:

$$[\text{Equation 1}]$$

$$S = A / B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

2. The cathode active material for a lithium secondary battery according to claim 1, wherein B is -2 or more and less than 0 and/or wherein A is -1,000 or more and -200 or less and/or wherein S is 200 to 500.

3. The cathode active material for a lithium secondary battery according to claims 1 or 2, wherein the dQ/dV discharge graph is obtained by calculating the change in charge with respect to the change in voltage measured during charging and discharging of a half-cell manufactured using the cathode active material in a 25°C chamber, wherein the charging is performed under CC/CV (constant current/constant voltage) conditions of 0.1C, 4.6 V, and 0.05C cut-off, and the discharging is performed under CC (constant current) conditions of 0.1C and 3 V cut-off.

4. The cathode active material for a lithium secondary battery according to one of claims 1 to 3, comprising a lithium metal oxide represented by Formula 1 below:

[Formula 1]    $Li_xNi_aM_bO_{2+z}$

(in Formula 1, M is at least one of Co, Mn, and Al, preferably Co and Mn, and $0.9 \leq x \leq 1.2$, $0.6 \leq a \leq 0.8$, preferably $0.6 \leq a < 0.7$, $0.2 \leq b \leq 0.4$, preferably $0.3 \leq b \leq 0.4$, and $-0.5 \leq z \leq 0.1$).

5. The cathode active material for a lithium secondary battery according to one of claims 1 to 4, comprising a lithium metal oxide represented by Formula 1-1 below:

[Formula 1-1] $\quad Li_xNi_aM1_{b1}M2_{b2}O_{2+z}$

(in Formula 1-1, M1 is at least one of Co, Mn, and Al, and M2 is at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P, and Zr, and $0.9 \leq x \leq 1.2$, $0.6 \leq a \leq 0.8$, $0.2 \leq b1+b2 \leq 0.4$, and $-0.5 \leq z \leq 0.1$).

6. The cathode active material for a lithium secondary battery according to claim 4, comprising a lithium metal compound core represented by Formula 1 and a coating layer covering at least a portion of the core, and
wherein the coating layer includes the M element of Formula 1.

7. The cathode active material for a lithium secondary battery according to claim 6, wherein the content of the coating element of the coating layer is 0.5 mol% to 3 mol% based on elements excluding lithium and oxygen in the cathode active material.

8. The cathode active material for a lithium secondary battery according to claim 5, comprising a lithium metal compound core represented by Formula 1-1 and a coating layer covering at least a portion of the core,
wherein the coating layer includes the M1 element of Formula 1.

9. The cathode active material for a lithium secondary battery according to claim 8, wherein the content of the coating element of the coating layer is 0.5 mol% to 3 mol% based on elements excluding lithium and oxygen in the cathode active material.

10. The cathode active material for a lithium secondary battery according to one of claims 1 to 9, wherein the cathode active material has a crystal size of the (003) plane of 300 nm to 850 nm as measured by X-ray diffraction analysis (XRD).

11. A method for preparing a cathode active material for a lithium secondary battery, comprising mixing a transition metal precursor and a lithium precursor and calcining the mixture,

wherein the cathode active material for a lithium secondary battery is a cathode active material having a peak ratio index (S) of 100 to 500, as defined by Equation 1 below:

$$[Equation\ 1]$$

$$S = A/B$$

(wherein A denotes the maximum peak intensity in the 4.2 V to 4.3 V region of the differential capacity (dQ/dV) discharge graph, and B denotes the peak intensity at 4.5 V in the dQ/dV discharge graph).

12. The method for preparing a cathode active material for a lithium secondary battery according to claim 11, wherein the calcination temperature is 900°C to 1,000°C and/or , wherein the heating rate in the calcination step is 2°C/min to 4°C/min and/or, wherein the holding time during the calcination is 8 hours to 14 hours.

13. A cathode active material for a lithium secondary battery manufactured by method according to claims 11 or 12.

14. A lithium secondary battery comprising:

a cathode; and
an anode disposed opposite to the cathode,
wherein the cathode comprises the cathode active material according to one of claims 1 to 10 and/or manufactured by method according to claims 11 or 12.

[FIG. 1]

[FIG. 2]

[FIG. 3]

[FIG. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240152898